# EUROPEAN PATENT SPECIFICATION

(11) **EP 1 460 473 B1**
(45) Date of publication and mention of the grant of the patent: **01.08.2007**
(21) Application number: 01275107.9
(22) Date of filing: 25.12.2001
(51) Int. Cl.: G02F 1/15, B60R 1/08, B60R 1/06, C03C 17/34, C03C 17/23

(54) **ANTIGLARE, ANTICLOUDING ELEMENT**
ANTIBLEND-, ANTIBESCHLAGSELEMENT
ELEMENT ANTIREFLET, ANTIBUEE

(43) Date of publication of application: 22.09.2004
(73) Proprietor: Murakami Corporation, Shizuoka-shi, Shizuoka, 422-8569 (JP)
(72) Inventor: KIKUCHI, Hideyuki, Fujieda Works, Fujieda-shi, Shizuoka 426-8601 (JP); KOMATSU, Toru, Fujieda Works, Fujieda-shi, Shizuoka 426-8601 (JP); KOBAYASHI, Masaki, Fujieda Works, Fujieda-shi, Shizuoka 426-8601 (JP)
(74) Representative: Krauss, Jan
(86) International application number: PCT/JP2001/011430
(87) International publication number: WO 2003/056386

(56) References cited:
- EP-A- 0 689 962
- EP-A- 1 003 067
- EP-A- 1 022 588
- EP-A1- 1 022 588
- EP-A2- 1 003 067
- WO-A-01/87593
- US-A1- 2001 021 066

## Description

### Field of the Invention

The present invention relates to anti-glare and anti-fogging elements for use in an automotive mirror, display device, a light control glass, and the like.

### Description of the Prior Art

An anti-fogging element consisting of a photocatalytic reaction substance and a porous inorganic oxide film is already known (Japanese Patent Application Laid-open No. H10-36144). Also, an anti-fogging photocatalytic composition composed of a semiconductive photocatalytic substance and fine oxide particles dispersed in said semiconductive photocatalytic substance is known (Japanese Patent Application Laid-open No. H09-225303).

Furthermore, an anti-glare element comprising a material in between which exhibits an electrochromic phenomenon causing reversible color change of the material upon application of a voltage is known. In such an anti-glare element, an anti-glare and anti-fogging element in which a transparent photocatalytic reaction substance, which exhibits a photocatalytic reaction, and a porous layer of a transparent inorganic oxide, which exhibits hydrophilicity, are laminated one on top of the other on the front side of one side of a base plate is already known (Japanese Patent Application Laid-open No. H10-347837).

Although Japanese Patent Application Laid-open No. H10-36144 and Japanese Patent Application Laid-open No. H09-225303 disclose configurations which utilize a semiconductive photocatalytic substance in an anti-fogging element, they don't disclose any configuration which comprises a substance, which exhibits an electrochromic phenomenon, and an anti-glare element in combination.

The invention according to Japanese Patent Application Laid-open No. H10-347837 is a combined configuration of an anti-fogging element comprising a photocatalytic reaction substance (TiO₂ film) and a porous inorganic oxide (porous SiO₂ film) and an anti-glare element comprising an in-between substance which exhibits an electrochromic phenomenon; however, an anti-glare function is not sufficiently taken into consideration in this invention

Namely, when an anti-fogging element is composed of an SiO₂ film and a film, its surface reflectivity greatly changes depending on the thickness of the film because of the high reflectivity of TiO₂. The anti-glare effect is reduced when an anti-fogging element having such a film thickness as to generate high surface reflection and an electrochromic anti-glare element are combined.

EP 1 022 588 A1 describes a hydrophile mirror which prevents double images from being formed and provides a sufficient hydrophilic property. The hydrophilic coating of this mirror is approximately 15 nm in thickness and the photocatalytic coating between the hydrophilic coating and the glass substrate is approximately 240 nm in thickness. This setting of dimensions reduces the surface optical reflectance of light with a wavelength ranging from approximately 550 nm to 580 nm. This also reduces the deterioration of the photocatalytic action caused by the diffusion of sodium ions contained in the glass substrate into the photocatalytic coating.

Document WO 01/87593 shows an anti-glare and anti-fogging element that comprises all features of the preamble of claim 1.

An object of the present invention is to provide an anti-glare and anti-fogging element in which reduction of an anti-glare effect can be prevented even when an anti-fogging element comprising an SiO₂ film and TiO₂ film is combined with an anti-glare element having an electrochromic substance.

This object is attained by the features of claim 1.

In order to solve the abovementioned problem, the present invention provide an anti-glare and anti-fogging element consisting of an anti-glare element having an electrochromic cell between a front transparent base plate and a back transparent base plate and an anti-fogging element formed on said front transparent base plate, which configured as an anti-glare and anti-fogging mirror by laminating a reflection film on the back of said back transparent base plate and has a reflectivity of 25% or less at the time of glare prevention, characterized in that said electrochromic cell is composed of a front electrode and a back electrode sandwiching a substance, which exhibits an electrochromic phenomenon, therebetween; said anti-fogging element is composed transparent photocatalytic reaction substance film of TiO₂ laminated on the front side of said front base plate, which exhibits a photocatalytic reaction, and a transparent porous inorganic oxide film laminated on said photocatalytic reaction substance film, which exhibits a hydrophilic property; said photocatalytic reaction substance film is 120 to 170 nm in thickness; and said porous inorganic oxide film is 10 to 50 nm in thickness.

The abovementioned element may comprise a resistant heating body laminate on the back of the side where said reflection film of said anti-glare element is formed and said heating body is configured to conduct electricity.

The abovementioned anti-glare and anti-fogging mirror can also be used as a automotive outer mirror.

### Brief Description of Drawings

Figure 1 illustrates a basic configuration of an anti-glare and anti-fogging element according to the present invention.
Figure 2 illustrates a basic configuration of an anti-glare and anti-fogging element in which a reflection film is formed on the anti-glare and anti-fogging element according to the present invention shown in Figure 1.
Figure 3 illustrates a configuration of an anti-fogging element on a glass base plate upon measuring surface reflectivity.
Figure 4 is a graph showing experimental data illustrating relationship between the thickness of TiO₂ film and SiO₂ film of an anti-fogging element and the surface reflectivity.
Figure 5 is a graph showing experimental data of spectral reflectivity characteristics of an anti-fogging element when the thickness of an SiO₂ film on a TiO₂ film is changed.
Figure 6 illustrates an anti-glare and anti-fogging element of Example 1 according to the present invention.
Figure 7 illustrates an anti-glare and anti-fogging element of Example 2 according to the present invention.
Figure 8 illustrates an anti-glare and anti-fogging element of Example 3 according to the present invention.
Figure 9 illustrates an anti-glare and anti-fogging element of Example 4 according to the present invention.
Figure 10 illustrates an anti-glare and anti-fogging element of Example 5 according to the present invention.
Figure 11 illustrates an anti-glare and anti-fogging element of Example 6 according to the present invention.
Figure 12 illustrates an anti-glare and anti-fogging element of Example 7 according to the present invention.
Figure 13 illustrates an anti-glare and anti-fogging element of Example 8 according to the present invention.
Figure 14 illustrates an anti-glare and anti-fogging element of Example 9 according to the present invention.
Figure 15 illustrates an experimental example in regard to dazzling of a mirror with an anti-glare and anti-fogging element.
Figure 16 is a plan top view of Figure 15.

### Best Mode of Carrying Out the Invention

Mode of embodiment of an anti-glare and anti-fogging element according to the present invention will be explained referring to the attached drawings.

### [Basic configuration]

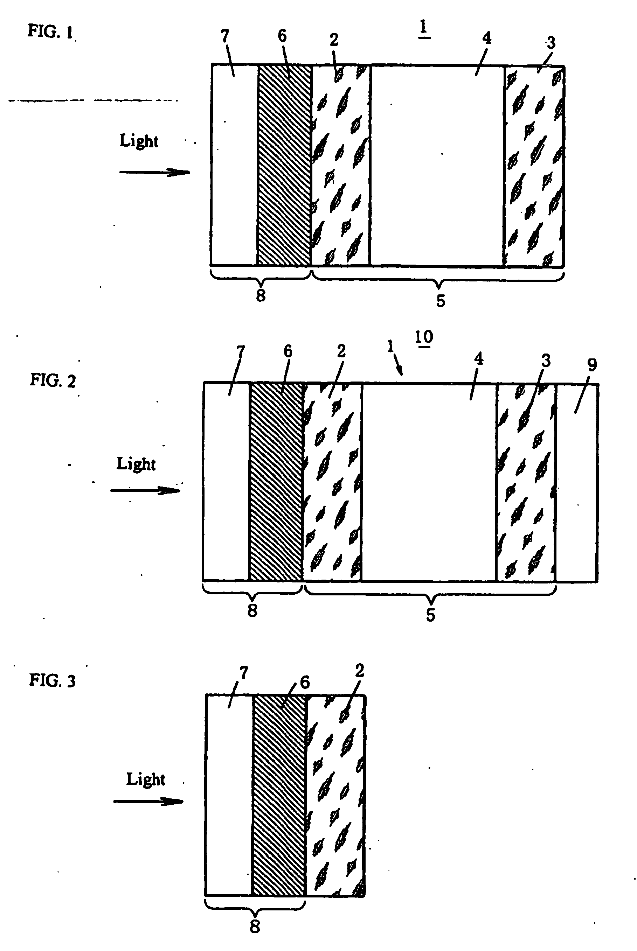

Figure 1 is a schematic drawing illustrating a basic configuration of an anti-glare and anti-fogging element according to the present invention. This anti-glare and anti-fogging element 1 comprises a combination of an anti-glare element 5 composed of a front transparent base plate 2 and a back transparent base plate 3 sandwiching an electrochromic cell 4, which exhibits an electrochromic phenomenon therebetween; and an anti-fogging element 8 composed of a transparent photocatalytic reaction substance film 6, which exhibits a photocatalytic reaction, and a transparent porous inorganic oxide film 7, which functions as a hydrophilic film, and the anti-fogging element 8 is laminated on the front side of the front transparent base plate 2 of the anti-glare element 5.

In the electrochromic cell 4 in Figure 1, a substance changes its color by a coloring or decoloring reaction caused by electron transfer when a voltage is applied between a front electrode and a back electrode. This electrochromic cell is already being utilized for anti-glare mirrors such as automotive anti-glare mirrors and light control glasses.

The porous inorganic oxide film 7 is composed of an SiO₂ film. This SiO₂ film is formed to be porous having numerous fine holes opening to the surface to exhibit a hydrophilic property. Namely, water attached to the surface of the porous inorganic oxide film 7 is transferred into the numerous fine holes by a capillary phenomenon and thinly spread on the surface to prevent water drop formation, which consequently provides an anti-fogging effect.

The photocatalytic reaction substance film 6 is composed of a TiO₂ film. Ultraviolet light incoming from the front side of the anti-fogging element 8 passes through the transparent porous inorganic oxide film 7 and is absorbed at the photocatalytic reaction substance film 6 to excite the photocatalytic reaction substance film 6, which generates electron-hole pairs in the photocatalytic reaction substance film 6. These electron-hole pairs move up to the porous inorganic oxide film 7 and react with air and water on the surface of the porous inorganic oxide film 7 to generate highly oxidative O₂⁻ (superoxide anions) and ·OH (hydroxy radicals). They decompose or remove organic substances such as dirt stuck or packed on the surface or inside the fine holes of the porous inorganic oxide film 7 and thus prevent the reduction of the hydrophilicity of the surface of the anti-glare element 8.

Figure 2 is a drawing showing an anti-glare and anti-fogging mirror 10 which is an applied example of this anti-glare and anti-fogging element. This anti-glare and anti-fogging mirror 10 comprises a reflection film 9 arranged on the back of the anti-glare and anti-fogging element 1. This anti-glare and anti-fogging mirror 10 is used, for example, as an automobile outer mirror. In this case, the anti-glare and anti-fogging mirror 10 functions as an ordinary mirror by keeping the electrochromic cell 4 in a decoloring state during daytime. On driving at night or in a tunnel, a voltage is applied to the electrochromic substance to color the electrochromic cell 4 so that the amount of light passing through the reflection film is reduced and thus the amount of light reflected by the anti-glare and anti-fogging mirror 10 can be reduced. As a result, the anti-glare and anti-fogging mirror 10 provides an anti-glare effect by reducing the amount of light reflected to the incident rays such as light cast by headlights of a car following behind.

In this way, the anti-glare and anti-fogging mirror 10 exhibits an anti-glare function. At the same time, as mentioned above, the porous inorganic substance film 7 makes the surface of the anti-fogging element 8 hydrophilic to provide an anti-fogging effect and dirt or the like packed in fine holes of the porous inorganic substance film 7 is decomposed or removed by the action of the photocatalytic reaction substance film 6 so that the anti-fogging element 5 can retain its hydrophilic property and the resulting ant-fogging effect.

The materials consisting of the anti-fogging element 8 have the following refraction index denoted n. Glass composing the transparent base plate: n = approx. 1.5, TiO₂ composing the photocatalytic reaction substance film 6: n = approx. 2.3, and SiO₂ composing the porous inorganic substance film: n = approx. 1.4. The refraction index of TiO₂ is higher than that of glass.

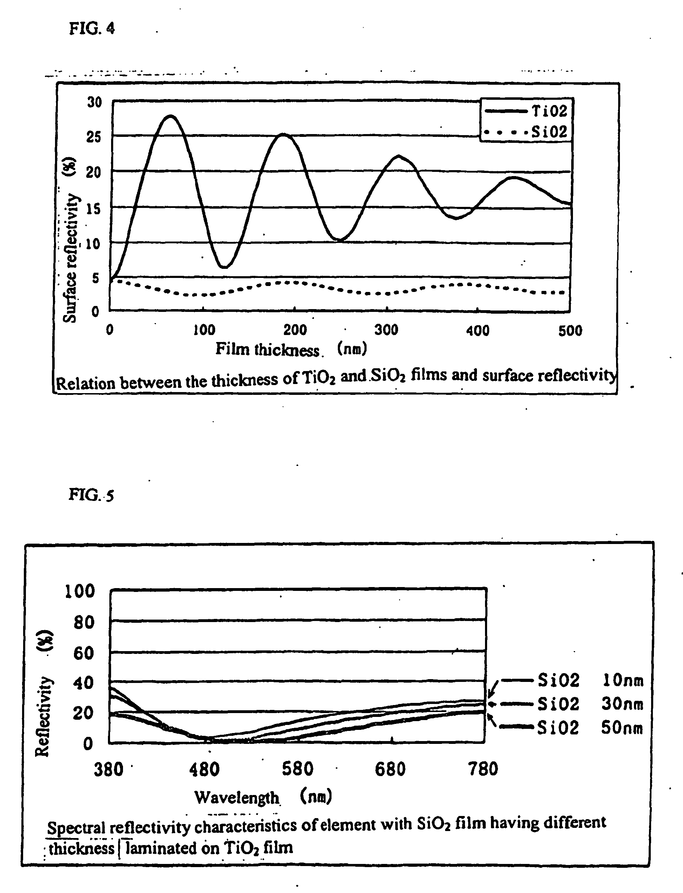

Figure 4 is an experimental data showing the change in the surface reflectivity of TiO₂ (n = approx. 2.3) and SiO₂ (n = approx. 1.4) in different film thickness, in the range of visible wavelength. While the surface reflectivity of the glass base plate (n = approx. 1.5) in the range of visible wavelength (380-780 nm) is about 4.2%, the surface reflectivity of the TiO₂ film comprising the photocatalytic reaction substance film 6 greatly varies depending on the film thickness as shown in Figure 4. The surface reflectivity of the film of SiO, which has a refraction index close to that of glass, slightly varies depending on the film thickness.

An anti-glare and anti-fogging element according to the present invention is characterized by a configuration having the following range of figures in order to attain a reflectivity of 25% or less, which is considered to prevent from feeling dazzled (reasons will be shown in an experiment described hereinafter) although there may be some variation among individuals in feeling, and a reflectivity of 24% or less for the anti-fogging element, further to provide a function as a photocatalyst and an excellent resistance to abrasion, and to reduce view angle dependence which disadvantageously changes a tone of the color depending on view angles.

Namely, the thickness of the photocatalytic reaction substance film (TiO₂ film) is limited within the range of 120 to 170 nm, and the thickness of the porous inorganic substance film (SiO₂ film) is limited within the range of 10 to 50 nm. Significance of limiting figures within these ranges, in particular the critical significance of upper and lower limits of these ranges will be explained below. First, the lower limits of the ranges of the thickness of the photocatalytic reaction substance film and the porous inorganic substance film will be explained.

The relation between the thickness of the photocatalytic reaction substance film 6 and the photocatalytic function is explained referring to the result of an experiment carried out by the present inventors, shown in the following Table 1. In this experiment, a TiO₂ film 6 was laminated on a transparent glass base plate 2 as a photocatalytic reaction substance film and then an SiO₂ film 7 was formed thereon as a porous inorganic substance film to construct an anti-fogging element (See Figure 3) Multiple anti-fogging elements, prepared in this way, each having a TiO₂ film 6 of different film thickness as shown in Table 1 were used. The waterdrop contact angle of each anti-fogging element was evaluated by actually mounting it on a driving car for a period of 6 months, during which the car was subjected to automatic double-waxing car wash once a month.

As shown in Table 1, when the thickness of the TiO₂ film is 100 nm or more, the contact angle is less than 20 degrees and thus the hydrophilicity can be maintained to provide an anti-fogging effect.

**Table 1**

| Thickness of photocatalytic TiO₂ film | Waterdrop contact angle | |
|---|---|---|
| | Start | After 6 months |
| 75 nm | Less than 5 degrees | 30-40 degrees |
| 100 nm | ↑ | Less than 20 degrees |
| 150 nm | ↑ | Less than 10 degrees |
| 200 nm | ↑ | ↑ |
| 300 nm | ↑ | ↑ |

The following Table 2 shows the result of an experiment in which porous SiO₂ films each having a different film thickness were prepared and the surface of each film was rubbed 10,000 times in a reciprocating motion using a rubbing unit wrapped with a cloth at a load of 1 N/cm², and then observed. As shown in Table 2, sufficient resistance to abrasion can be attained when the thickness of the porous SiO₂ film is 10 nm or more. Therefore, a thickness of 10 nm or more is appropriate for the porous SiO₂ film.

**Table 2**

| Thickness of porous SiO₂ film | Surface appearance |
|---|---|
| 5 nm | Abrasion observed |
| 10 nm | No abrasion observed. |
| 20 nm | ↑ |
| 30 nm | ↑ |

From the results above, in an anti-fogging element comprising a TiO₂ film 6 as an photocatalytic reaction substance film laminated on a transparent glass base plate and an SiO₂ film 7 as an porous inorganic substance film formed thereon, the lower limit of the thickness of the photocatalytic reaction substance film (TiO₂ film) was set to be 100 nm and the lower limit of the thickness of the porous inorganic substance film (SiO₂ film) was set to be 10 nm.

Next, the upper limits of the photocatalytic reaction substance film (TiO₂ film) and the porous inorganic substance film (SiO₂ film) are explained. First, the SiO₂ film is to be explained. As the thickness of the SiO₂ film increases, it becomes hard for electron-hole pairs generated in the photocatalytic reaction substance film (TiO₂ film) to move through the hydrophilic porous inorganic substance film, which interferes with the rapid proceeding of the photocatalytic reaction

Taking this interference into consideration, in order to promote the rapid photocatalytic reaction, the SiO₂ film have to be about 50 nm in thickness and thus the upper limit is set to be 50 nm. Further, it has been confirmed that the waterdrop contact angle is 20 degrees or less when the thickness of the SiO₂ film is 50 nm or less.

Next, the upper limit of the photocatalytic reaction substance film (TiO₂ film) is to be explained. As explained referring to Figure 4, the surface reflectivity of the TiO₂ film greatly varies depending on the thickness of the TiO₂ film. Here, although the lower limit of the thickness of the TiO₂ film is set to be 120 nm as mentioned above, the surface reflectivity is minimum at a thickness of about 120 nm and then gradually increases reaching its maximum at a thickness of about 180 nm, after which the reflectivity decreases and then increases again, as shown in the curves for the TiO₂ films having a thickness of greater than 100 nm, in Figure 4.

Although the reflectivity also decreases at a film thickness of near 240 nm and 370 nm, the reflectivity in itself is higher than that at a thickness of near 120 nm. Further, as the film thickness increases, the number of spectral peaks and troughs increases, which causes a view angle dependent problem such that the tone of the color changes depending on the view angle. Therefore, a thickness of near 120 nm is considered to be most appropriate.

Since the anti-fogging element 8 comprises a double-layer configuration in which the porous inorganic substance film (SiO₂ film) is laminated on the photocatalytic reaction substance film (TiO₂ film), it is important to set the upper limit of the thickness of the TiO₂ film by taking the laminated SiO₂ film into consideration.

As mentioned above, although the lower limit and the upper limit of the thickness of the SiO₂ film are set to be 10 nm and 50 nm, respectively, while the refraction index of the SiO₂ film is as low as about 1.4, the reflectivity of the anti-fogging element itself comprising the SiO₂ film formed on the TiO₂ film decreases as the thickness of the SiO₂ film increases when the SiO₂ film is laminated on the TiO₂ film in the range of 10 nm to 50 nm in thickness.

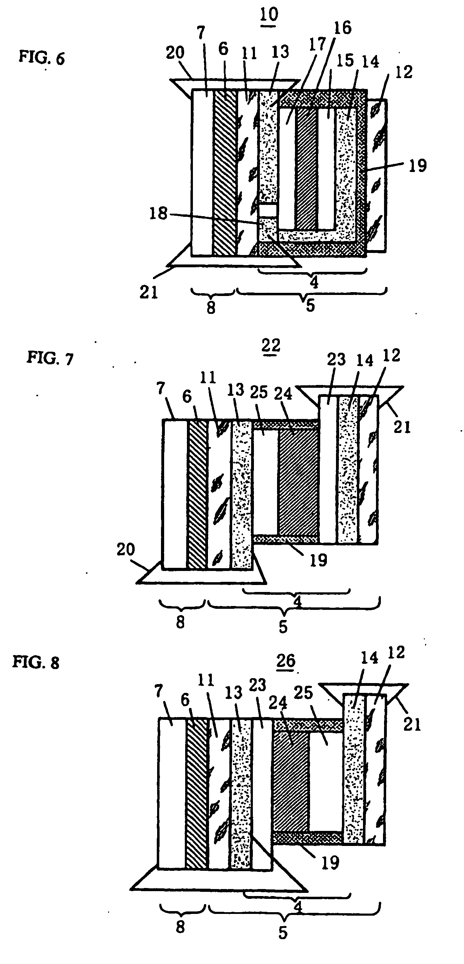

In this connection, Figure 5 shows spectral reflectivity characteristics of the anti-fogging elements obtained by measuring the spectral reflectivity of the anti-fogging elements in which the thickness of the photocatalytic reaction substance film (TiO₂ film) is set to be 100 nm and the porous inorganic substance film (SiO₂ film) is laminated thereon at a thickness of 10 nm, 30 nm or 50 nm. Figure 5 shows that the reflectivity of the anti-fogging element decreases as the thickness of the SiO₂ film increases, which is similarly observed when the thickness of the TiO₂ film is changed.

Although the thickness of the TiO₂ film has thus no effect on the surface reflectivity of the anti-fogging element, it is necessary to discuss the effect of the thickness of the TiO₂ film on reflection of the entire anti-glare and anti-fogging element and on the surface reflectivity of the anti-fogging element, since the anti-glare and anti-fogging element according to the present invention comprises a combination of the electrochromic anti-glare element and the anti-fogging element.

Accordingly, the present inventors carried out an experiment in which the thickness of the SiO₂ film in the anti-glare and anti-fogging element was set to be 10 nm (the lower limit allowable in terms of abrasion and to attain the maximal reflectivity of the anti-fogging element) and the surface reflectivity of the anti-fogging element on the glass base plate and the reflectivity of the anti-glare and anti-fogging element at the time of glare prevention were confirmed by changing the thickness of the TiO₂ film.

In this case, the reflectivity of the anti-glare and anti-fogging element never be lower than the reflectivity of the anti-fogging element since the anti-fogging element is formed on the front side in the anti-glare and anti-fogging element comprising a combination of the electrochromic anti-glare element and the anti-fogging element according to the present invention. In short, however low the reflectivity of the anti-glare element may be, it never be lower than the reflectivity of the anti-fogging element.

Accordingly, taking the efficiency and durability of an electrochromic anti-glare element into consideration, an electrochromic anti-glare element having a configuration, to be explained below, which supposedly provides a reflectivity as low as possible was prepared, and then the reflectivity of an anti-glare and anti-fogging element having the anti-fogging element formed on its surface was measured. (Here, although the upper limit of the reflectivity of the electrochromic anti-glare element at the time of glare prevention should be shown, not the upper limit but the lower limit was shown since the reflectivity varies depending on the configuration of the electrochromic anti-glare element and the running voltage).

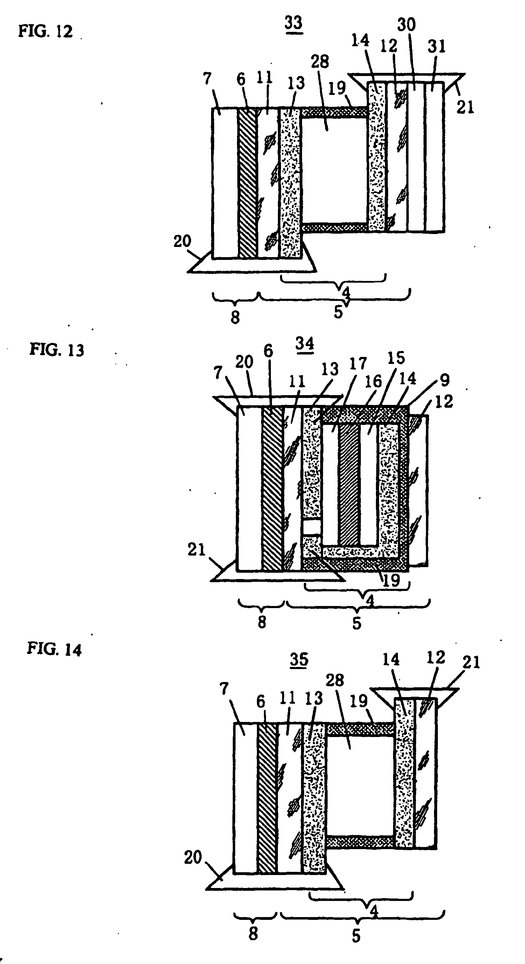

The abovementioned electrochromic anti-glare element, which supposedly provides a reflectivity as low as possible, used in this experiment is explained as follows. A configuration shown in Figure 14 was applied in this experiment. In the embodied configuration, an ITO film 200 nm in thickness is used as a transparent conductive film 13 laminated on a 1.1 mm-thick glass base plate 11. On the other hand, a Cr-Rh film 100 nm in thickness is laminated as an electrode/reflection film 14 on a back glass base plate 12. An electrochromic solution 28 is composed of propylene carbonate as a solvent, 1,1'-dibenzyl-4,4'-bipyridinium fluroborate as a reductive coloring agent, and 5,10-dihydro-5,10-dimethyl fenadine as an oxidative coloring agent. An applied voltage was 1.3 V.

The result of the experiment is shown in Table 3. As shown in Table 3, the reflectivity of the anti-glare and anti-fogging element was confirmed to be less than 25%, which is considered to be the upper limit of the reflectivity to attain an anti-glare effect, when the anti-glare and anti-fogging element comprising the SiO₂ film 10 nm in thickness and the TiO₂ film 170 nm in thickness was combined with the electrochromic anti-glare element having the abovementioned configuration which supposedly provides a reflectivity as low as possible. Accordingly, the upper limit of the thickness of the TiO₂ film is set to be 170 nm.

**Table 3**

| Thickness of SiO₂ film (nm) | Thickness of TiO₂ film (nm) | Surface reflectivity of anti-fogging element (%) | Reflectivity of anti-glare and anti-fogging element at the time of glare prevention (%) |
|---|---|---|---|
| 10 | 150 | 15.6 | 16.7 |
| 10 | 155 | 18.0 | 19.1 |
| 10 | 160 | 20.0 | 21.1 |
| 10 | 165 | 21.9 | 23.0 |
| 10 | 170 | 23.3 | 24.3 |
| 10 | 175 | 24.3 | 25.3 |
| 10 | 185 | 24.9 | 25.9 |

Consequently, the thickness of the photocatalytic reaction substance film (TiO₂ film) of the anti-glare and anti-fogging element according to the present invention is limited to the range from 120 nm to 170 nm and the thickness of the porous inorganic substance film (SiO₂ film) is limited to the range from 10 nm to 50 nm. Significance of limiting the ranges and critical significance of the upper and lower limits are as explained above.

Further, as described above, generally, when eyeglasses are treated with a hydrophilic coating (anti-fogging treatment) without special consideration on the film thickness, the surface reflectivity increases, which results in enhancing incidental reflection to occasionally cause a user discomfort. However, such a problem will be solved if an anti-fogging element comprising a photocatalytic reaction substance film (TiO₂ film) 100-170 nm in thickness and a porous inorganic substance film (SiO₂ film) 10-50 nm in thickness as mentioned above is applied as the hydrophilic coating to the eyeglasses. Thus, the anti-fogging element has a potential use in such a field.

### [Example 1]

Figure 6 shows an anti-glare and anti-fogging element of Example 1 according to the present invention. This anti-glare and anti-fogging element 10 has a basic configuration of an integrated combination of an anti-glare element 5 composed of a front transparent glass base plate 11 and a back transparent glass base plate 12 sandwiching an electrochromic cell 4 therebetween and an anti-fogging element 8 composed of a transparent photocatalytic reaction substance film 6 and a hydrophilic transparent porous inorganic oxide film 7, as mentioned above.

The electrochromic cell 4 has a configuration in which a reductive coloring layer 15, an electrolyte 16, and an oxidative coloring layer 17 are arranged in order from the back between a front transparent electrode 13 and a back transparent electrode 14. The back transparent electrode 14 is formed in an L shape and connected to the front transparent electrode 13 formed on the same side as the front transparent electrode 13. This electrochromic cell 4 is tightly held in a U shape with a sealing material 19 as shown in the figure.

A front clip electrode 20 is connected to the front transparent electrode 13 and further designed to hold together the front transparent electrode 13, the front glass base plate 11, the photocatalytic reaction substance film 6 and the porous inorganic oxide film 7. A back clip electrode 21 is connected to a front transparent electrode 18 (a part separated from the front transparent electrode 13) and further designed to hold together the front glass base plate 11, the photocatalytic reaction substance film 6 and the porous inorganic oxide film 7. A voltage is applied to the electrochromic cell 4 by the front clip electrode 20 and the back clip electrode 21.

Transparent conductive films of ITO, SnO₂, or the like are used for the transparent electrodes 13 and 14. A reductive coloring film of WO₃, MoO₃ or the like is used for the reductive coloring layer 15. A solid electrolyte film of Ta₂O₅ or the like is used for the electrolyte 16. An oxidative coloring film of IrOx, NiOx, Sn·IrOx, or the like is used for the oxidative coloring layer 17,

Reactions in Example 1 in which the oxidative coloring layer 15 is a WO₃ film, the electrolyte 16 is a Ta₂O₅ film, and the oxidative coloring layer 17 is an Sn·IrOx film are now to be explained. In the oxidative coloring layer 17, H₂O is present as iridium hydroxide Ir(OH)ₙ. Upon application of a voltage to the electrochromic cell 4 by the front clip electrode 20 and the back clip electrode 21, transmission of proton H⁺ to the Ta₂O₅ film and electron emission to the front transparent electrode 13 occur in the oxidative coloring layer 17, and then the following oxidation reaction (1) proceeds to color the oxidative coloring layer 17.

Ir(OH)ₙ → IrOₓ(OH)ₙ₋ₓ (colored) + xH⁺ + xe⁻ (1)

On the other hand, in the reductive coloring layer 15, proton H⁺ in the Ta₂O₅ film is transmitted into the WO₃ film, the electron from the terminal is injected into the WO₃ film, and then the following reductive reaction (2) proceeds in the WO₃ film to color the WO₃ film.

WO₃ + xH⁺ + xe⁻→ HxWO₃ (colored) (2)

Furthermore, when the applied voltage is switched to the opposite direction or the electrodes 20 and 21 are short-circuited, the reductive reaction proceeds in the opposite direction of the reaction (1) above in the IrOx film to decolor the oxidative coloring layer 17, and the oxidative reaction proceeds in the opposite direction of the reaction (2) above in the WO₃ film to decolor the reductive coloring layer 15. Further the Ta₂O₅ film contains H₂O, which is ionized by the abovementioned voltage application and is present also in the form of a proton H⁺or an OH⁻ ion to contribute the abovementioned coloring and decoloring reactions.

In Example 1, generally, light can be transmitted through the anti-glare and anti-fogging element from the front side utilizing the abovementioned decolored state. And the light transmission can be reduced by applying a voltage between the clip electrodes 20 and 21 to generate the coloring state. The system can be used as a light control glass or display device. When a mirror (reflection film) is arranged on the back of the back glass base plate, the system functions as an ordinary mirror in the decolored state and as an anti-glare mirror in the colored state by reducing light transmission.

### [Example 2]

Figure 7 shows an anti-glare and anti-fogging element 22 of Example 2 according to the present invention. This anti-glare and anti-fogging element 22 comprises an integrated combination of an anti-glare element 5 composed of a front transparent glass base plate 11 and a back transparent glass base plate 12 sandwiching an electrochromic cell 4 therebetween and an anti-fogging element 8 composed of a transparent photocatalytic reaction substance film 6 and a hydrophilic transparent porous inorganic oxide film 7, as in Example 1.

The electrochromic cell 4 has a configuration in which an electrode protection layer 23, an electrolyte solution 24, and an electrochromic substance 25 are sandwiched in order from the back between a front transparent electrode 13 and a back transparent electrode 14, and the electrolyte solution 24 and the electrochromic substance 25 are tightly held with a sealing material 19.

A front clip electrode 20 is connected to the front transparent electrode 13 and further designed to hold together the front transparent electrode 13, the back glass base plate 11, the photocatalytic reaction substance film 6 and the porous inorganic oxide film 7. A back clip electrode 21 is connected to the back transparent electrode 14 via the electrode protection layer 23 and further designed to hold together the electrode protection layer 23, the back transparent electrode 14, and the back glass base plate 12.

Transparent conductive films of ITO, SnO₂, or the like are used for the transparent electrodes. WO₃, MoO₃, IrOₓ, or the like is used for the electrochromic substance. The electrolyte solution comprises an electrolyte such as LiI and LiClO₄, a solvent such as γ-butyrolactone and propylene carbonate, and an ultraviolet light absorbent such as benzophenone and cyanoacrylate.

Here, a reaction in Example 2, in which the electrochromic substance 25 used is a reductive coloring material WO₃ and the electrolyte used in the electrolyte solution is LiI, is to be explained. Upon application of a voltage between the clip electrodes 20 and 21, Li⁺ (lithium cation) is released from the electrolyte and an electron is injected from the power source, and then the following reaction (3) proceeds to color WO₃blue (color development).

xLi⁺ + WO₃ + xe⁻ → Liₓ WO₃ (colored blue) (3)

Although this reaction (3) is reversible, this blue reductive state is maintained when the power source circuit is opened in the state of Liₓ WO₃. When a reverse voltage is applied or the electrodes are short-circuited, a reverse reaction proceeds in the opposite direction of the reaction (3) to cause decoloring.

This Example 2 can be applied to a light control glass or display device and also used as an anti-glare and anti-fogging mirror by placing a mirror on the back of the back glass base plate 14; by setting the thickness of the SiO₂ film and TiO₂ film in the anti-fogging element to be 10-50 nm and 100-170 nm, respectively, an anti-fogging effect can be attained by the anti-fogging element 8 and an anti-glare effect can be more assured.

### [Example 3]

Figure 8 shows an anti-glare and anti-fogging element 26 of the Example 3 according to the present invention. This anti-glare and anti-fogging element 26 is different from the anti-glare and anti-fogging element 22 of Example 2 in that the order of the arrangement of the electrode prevention layer 23, the electrolytic solution 24, and the electrochromic substance 25 is reversed, but its configuration and reaction are the same

### [Example 4]

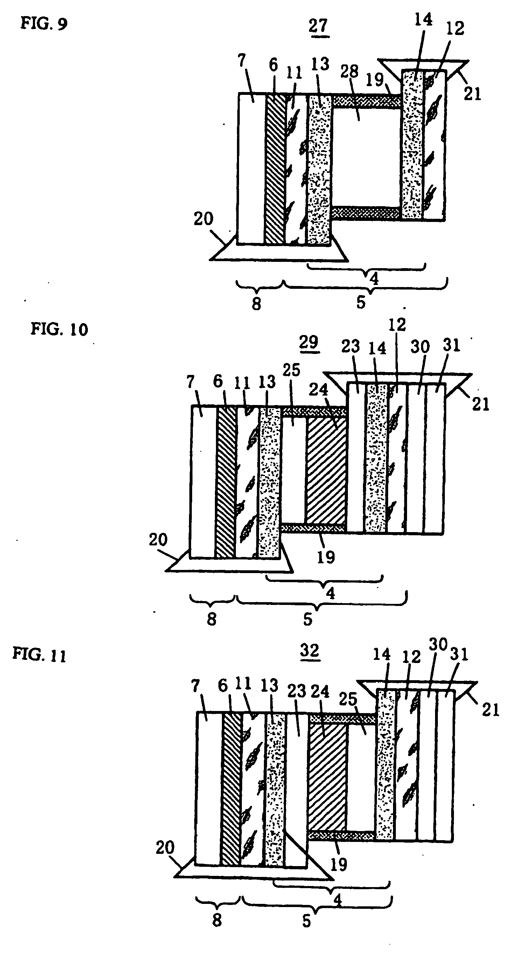

Figure 9 shows an anti-glare and anti-fogging element 27 of Example 4 according to the present invention. This anti-glare and anti-fogging element 27 comprises an integrated combination of an anti-glare element 5 composed of a front transparent glass base plate 11 and a back transparent glass base plate 12 sandwiching an electrochromic cell 4 therebetween and an anti-fogging element 8 composed a transparent photocatalytic reaction substance film 6 and a hydrophilic transparent porous inorganic oxide film 7, as in Example 1.

The electrochromic cell 4 has a configuration in which an electrochromic solution 28 is filled between a front transparent electrode 13 and a back transparent electrode 14 and is tightly held with a sealing material 19.

A front clip electrode 20 is connected to the front transparent electrode 13 and further designed to hold together the front transparent electrode 13, the back glass base plate 11, the photocatalytic reaction substance film 6 and the porous inorganic oxide film 7. A back clip electrode 21 is connected to the back transparent electrode 14 and further designed to hold together the back transparent electrode 14 and the back glass base plate 12.

The electrolyte solution 28 comprises an electrochromic substance such as viologen, a solvent such as γ-butyrolactone and propylene carbonate, and an ultraviolet absorbent such as benzophenone and cyanoacrylate. Generally, the electrochromic solution is in a decolored state. Upon application of a voltage between the clip electrodes 20 and 21, viologen exhibits an oxidation-reduction reaction, which results in coloring (color development).

This Example 4 can be applied to a light control glass or display device and also be used as an anti-glare and anti-fogging mirror by placing a mirror on the back of the back glass base plate 12. By setting the thickness of the SiO₂ film and TiO₂ film in the anti-fogging element to be 10-50 nm and 100-170 nm, respectively, an anti-fogging effect can be attained by the anti-fogging element 8 and an anti-glare effect can be more assured.

### [Example 5]

Figure 10 shows an anti-glare and anti-fogging element 29 of Example 5. This anti-glare and anti-fogging element is an anti-glare and anti-fogging mirror mentioned in Example 2, in which an reflection film 30 of Cr, Al, Ag, Rh, Cr-Rh, or the like is formed on the back of a back glass base plate 12, a protection coat 31 is formed on further back of this film, and a back clip 21 holds together the layers between the back transparent electrode 14 and the protection coat 31, inclusive. The action of the system is the same as explained in Example 2.

### [Example 6]

Figure 11 shows an anti-glare and anti-fogging element 32 of Example 6. This anti-glare and anti-fogging element 32 is an anti-glare and anti-fogging mirror mentioned in Example 3, in which an reflection film 30 of Cr, Al, Ag, Rh, Cr-Rh, or the like is formed on the back of a back glass base plate 12, a protection coat 31 is formed on further back of this film, and a back clip 21 holds together the layers between the back transparent electrode 14 and the protection coat 31, inclusive. The action of the system is the same as explained in Example 3.

### [Example 7]

Figure 12 shows the anti-glare and anti-fogging element 33 of Example 7. This anti-glare and anti-fogging element 33 is an anti-glare and anti-fogging mirror, in which a reflection film 30 of Cr, Al, Ag, Rh, Cr-Rh or the like is formed on the back of the back glass base plate of Example 4, a protection coat 31 is formed on further back of this film, and a back clip 21 holds together the layers between the back transparent electrode 14 and the protection coat 31, inclusive. The action of the system is the same as explained in Example 4.

### [Example 8]

Figure 13 shows an anti-glare and anti-fogging element (with a reflection film) 34 of Example 8. This anti-glare and anti-fogging element 34 is an anti-glare and anti-fogging mirror, in which the back transparent electrode 14 of Example 1 is made into an electrode and reflection film and this electrode and concurrently reflection film is composed of a metal film of Cr, Al, Ag, Rh, Cr-Rh, or the like. The action of the system is the same as explained in Example 1.

### [Example 9]

Figure 14 shows an anti-glare and anti-fogging element 35 of Example 9. This anti-glare and anti-fogging element 35 has a configuration in which the back transparent electrode 14 of Example 4 is made into an electrode and concurrently reflection film and this electrode and concurrently reflection film is composed of a metal film of Cr, Al, Ag, Rh, Cr-Rh, or the like. The action of the system is the same as explained in Example 4.

Further, in Examples 5 to 9, the anti-glare and anti-fogging element can be heated as a whole by a resistant heating body (not shown) furnished on the back of the protection coat 31 on the backside of the reflection film 30 or the back glass base plate 14 so that the water attached to the porous inorganic oxide film 7 can quickly evaporate and the anti-fogging effect can be further improved.

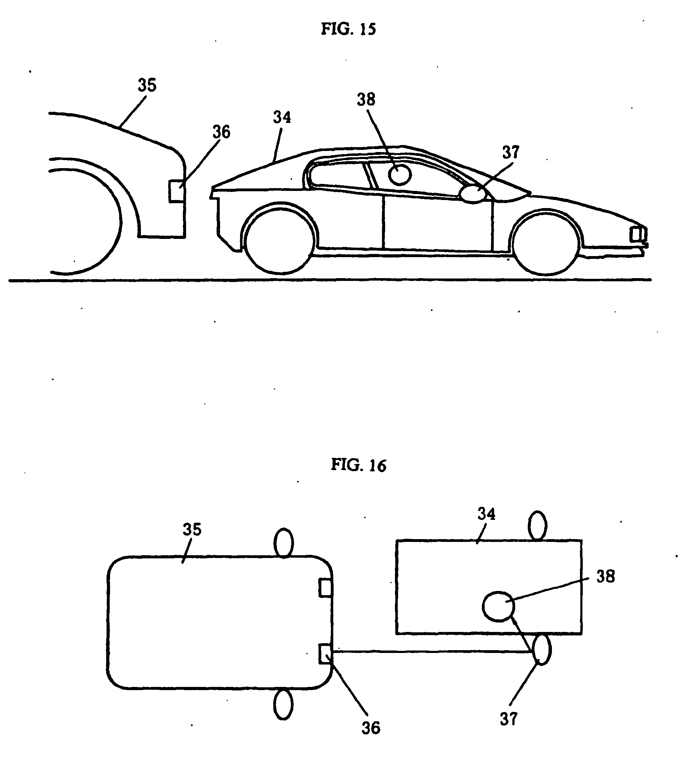

In the present invention, the thickness of TiO₂ and SiO₂ films of the anti-fogging element was set as mentioned above on the assumption that dazzling can generally be avoided when the reflectivity of the anti-glare and anti-fogging element is controlled to be 25% or less. In order to verify that dazzling can generally be avoided when the reflectivity of the anti-glare and anti-fogging element is controlled to be 25% or less, an experiment was carried out to assess the degree of dazzling and the like experienced by subjects due to the reflection of the mirror during driving. This experimental example is to be explained as follows referring to Figure 15 and Figure 16.

A front car 34 and a rear car 35 were arranged as shown in Figure 15 (a side view of the two cars aligned in front and behind) and Figure 16 (a top view of the two cars aligned in front and behind) so that a rearview mirror 37 on the right side of the front car 34 was irradiated by a headlight 36 of the rear car 35 coming in from the right behind or slightly from the right side (in this case the driver's seat is on the right side), which simulates a probable general condition that a driver 38 maximally feels dazzled at night, for example, while waiting for the traffic light to change.

In this arrangement, the degree of dazzling was evaluated by irradiating the anti-fogging anti-glare element of the rearview mirror 37 with a headlight 36 from the back, at night in the absence of any other light source. The headlight used was a discharge valve headlight which utilizes an arc discharge as a luminous source or a halogen headlamp having a bulb filled with a halogen gas, and variations of the reflectivity of the anti-fogging and anti-glare element were 35%, 30%, 25%, 20%, and 15%.

The degree of dazzling was confirmed by 10 subjects. The subjects looked straight at the rearview mirror 30 irradiated by the headlight 36 for 10 seconds and then looked aside from the rearview mirror to assess the degree of dazzling. The reflectivity with which none of the ten subjects felt dazzled was confirmed. The result of the evaluation is shown in the following Table 4.

**Table 4**

| Reflectivity of anti-fogging and anti-glare element | Degree of dazzling | Vision immediately after straight look at rearview mirror |
|---|---|---|
| 35% | Dazzled | Blurred and out of focus |
| 30% | Slightly dazzled | Slightly blurred |
| 25% | Not dazzled | Clear |
| 20% | Not dazzled | Clear |
| 15% | Not dazzled | Clear |

As a result of this experiment, it was found that dazzling could be avoided when the reflectivity of the mirror with the anti-glare and anti-fogging element was 25%.

### Possibility of Industrial Use

Since an anti-glare and anti-fogging element according to the present invention has the abovementioned configuration, it exhibits both anti-glare and anti-fogging effects and its anti-glare effect cannot be reduced because the reflectivity of the anti-glare and anti-fogging element as a whole can be reduced even at the moment of glare prevention. Accordingly, in particular, when used as an automotive outer mirror or room mirror, glare caused by lights of a car behind can be prevented. Furthermore it can be used for various display devices, light control glasses or the like.

## Claims

1. An anti-glare and anti-fogging element consisting of an anti-glare element (5) having an electrochromic cell (4) between a front transparent base plate (2 or 11) and a back transparent base plate (3 or 12) and an anti-fogging element (8) placed on said front transparent base plate (2 or 11), which is configured as an anti-glare and anti-fogging mirror (10) by laminating a reflection film (9) on the back of said back transparent base plate (3 or 12),
said electrochromic cell is composed of a front electrode and a back electrode sandwiching a substance, which exhibits an electrochromic phenomenon, therebetween,
said anti-fogging element (8) is composed of a transparent photocatalytic reaction substance film(6) of TiO₂ laminated on the front side of said front base plate (2 or 11), which exhibits a photocatalytic reaction, and a transparent porous SiO₂ film (7) laminated on said photocatalytic reaction substance film (6) and being 10 to 50 nm in thickness,
**characterized in that**
said porous SiO₂ film (7) has numerous fine holes opening to the surface so that water being attached to the surface of said porous SiO₂ film (7) is transferred into said fine holes of said porous SiO₂ film (7) and thinly spreads on the surface of said porous SiO₂ film (7), wherein dirt or the like that is packed in said fine holes of said porous SiO₂ film (7) is decomposed or removed by the action of said photocatalytic reaction substance film (6); and **in that**
said photocatalytic reaction substance film (6) is 120 to 170 nm in thickness such that a reflectivity of the anti-glare and anti-fogging element is 25% or less at the time of glare prevention.

2. The anti-glare and anti-fogging element according to claim 1, **characterized in that** resistant heating body is laminated on the back of the side where said reflection film of said anti-glare element (5) is formed and said heating body is configured to conduct electricity.

3. The anti-glare and anti-fogging element according to any of claims 1 to 2, **characterized in that** said anti-glare and anti-fogging mirror is configured as an automotive outer mirror.

## Patentansprüche

1. Blend- und Beschlagschutz bestehend aus einem Blendschutzteil (5) mit einer elektrochromen Zelle (4) zwischen einer vorderen transparenten Grundplatte (2 oder 11) und einer hinteren transparenten Grundplatte (3 oder 12), und einem Beschlagschutzteil (8), das an der vorderen transparenten Grundplatte (2 oder 11) angeordnet ist, welcher Blend- und Beschlagschutz als Blendschutz- und Beschlagschutzspiegel (10) ausgebildet ist, indem eine Reflexionsschicht (9) auf der Rückseite der hinteren transparenten Grundplatte laminiert ist,
wobei die elektrochrome Zelle aus einer Vorderelektrode, einer Rückelektrode und einer zwischen den Elektroden angeordneten Substanz, die eine elektrochrome Eigenschaft aufweist, gebildet ist,
wobei das Beschlagschutzteil (8) aus einer transparenten photokatalytischen Reaktionssubstanzschicht (6) aus TiO₂, die an der Vorderseite der vorderen Grundplatte laminiert ist und eine photokatalytische Reaktion ausführt, und einer 10 bis 50 nm dikken, transparenten porösen SiO₂-Schicht (7), die auf der photokatalytischen Reaktionssubstanzschicht (6) laminiert ist, gebildet ist,
**dadurch gekennzeichnet, daß**
die poröse SiO₂-Schicht (7) zahlreiche kleine Löcher aufweist, die zur Oberfläche offen sind, so daß an der Oberfläche der porösen SiO₂-Schicht (7) liegendes Wasser in die kleinen Löcher der porösen SiO₂-Schicht (7) geleitet wird und an der Oberfläche der porösen SiO₂-Schicht (7) dünn ausgebreitet wird, wobei in den kleinen Löchern der porösen SiO₂-Schicht eingelagerter Schmutz und ähnliches durch die photokatalytische Reaktionssubstanzschicht (6) entweder abgebaut oder entfernt wird; und die photokatalytische Reaktionssubstanzschicht (6) 120 bis 170 nm dick ist, so daß ein Reflexionsgrad des Blend- und Beschlagschutzes bei einer Blendvermeidung bei 25% oder weniger liegt.

2. Blend- und Beschlagschutz nach Anspruch 1, **dadurch gekennzeichnet, daß** ein Widerstandswärmkörper auf der Rückseite der Seite laminiert ist, an der die Reflexionsschicht des Blendschutzteiles ausgebildet ist, wobei der Wärmkörper derart aufgebaut ist, daß er elektrischen Strom leitet.

3. Blend- und Beschlagschutz nach einem der Ansprüche 1 oder 2, **dadurch gekennzeichnet, daß** der Blendschutz- und Beschlagschutzspiegel als ein Fahrzeugaußenspiegel ausgebildet ist.

## Revendications

1. Un élément anti-éblouissement et anti-embuement comprenant un élément anti-éblouissement (5) constitué d'une cellule électrochrome (4) entre une plaque de base frontale transparente (2 ou 11) et une plaque de base arrière transparente (3 ou 12), et un élément anti-embuement (8) placé sur ladite plaque de base frontale transparente (2 ou 11), qui est façonné en miroir anti-éblouissement et anti-embuement (10) en laminant un film de réflexion (9) sur l'arrière de ladite plaque de base arrière transparente (3 ou 12),
ladite cellule électrochrome étant constitué d'une substance présentant un phénomène électrochrome, prise en sandwich entre une électrode frontale et une électrode arrière,
ledit élément anti-embuement (8) étant constitué d'un film transparent de la substance de réaction photocatalytique (6) TiO₂ laminé sur la face frontale de ladite plaque de base frontale (2 ou 11) et présentant une réaction photocatalytique, et un film transparent à pores de SiO₂ (7) laminé sur ledit film transparent de la substance de réaction photocatalytique (6) et d'une épaisseur de 10 à 50 nm,
**caractérisé en ce que**
ledit film à pores de SiO₂ (7) comprend une multitude de petits trous débouchant à la surface, de sorte que de l'eau adhérée à la surface dudit film à pores de SiO₂ (7) est transférée dans lesdits petits trous dudit film à pores de SiO₂ (7) et s'étend de façon mince sur la surface dudit film à pores de SiO₂ (7), où des salissures ou autres choses semblables contenues dans lesdits petits trous dudit film à pores de SiO₂ (7) sont décomposées ou expulsées par l'action dudit film de la substance de réaction photocatalytique (6) ; et **en ce que**
ledit film de la substance de réaction photocatalytique (6) est d'une épaisseur de 120 à 170 nm, de sorte qu'une réflectivité de l'élément anti-éblouissement et anti-embuement est de 25 % ou moins au moment de la prévention d'éblouissement.

2. L'élément anti-éblouissement et anti-embuement selon la revendication 1, **caractérisé en ce qu'**un dispositif de chauffage résistant est laminé sur l'arrière de la face où ledit film de réflexion dudit élément anti-éblouissement (5) est formé, et que ledit dispositif de chauffage est configuré de façon à conduire l'électricité.

3. L'élément anti-éblouissement et anti-embuement selon l'une des revendications 1 ou 2, **caractérisé en ce que** ledit miroir anti-éblouissement et anti-embuement est façonné en miroir extérieur pour automobiles.
